# NOUVEAU FASCICULE DE BREVET EUROPEEN

(11) **EP 1 430 761 B2**
(45) Date de publication et mention de la décision concernant l'opposition: **11.04.2012**
(45) Mention de la délivrance du brevet: 03.05.2006
(21) Numéro de dépôt: 03360141.0
(22) Date de dépôt: 08.12.2003
(51) Int. Cl.: A01C 7/12, A01C 7/10

(54) **Mécanisme de dosage pour un semoir pouvant distribuer plusieurs produits simultanément**
Dosiervorrichtung für eine Sämaschine, die mehrere Produkte gleichzeitig verteilen kann
Metering device for a seed drill which can spread different products simultaneously

(30) Priorité: 16.12.2002 FR 0216046
(43) Date de publication de la demande: 23.06.2004
(73) Titulaire: KUHN S.A., 67700 Saverne (FR)
(72) Inventeur: Viriat, Laurent, 77940 Diant (FR); Piasentin, Christian, 77710 Lorrez Le Bocage (FR)
(74) Mandataire: Andres, Jean-Claude

(56) Documents cités:
- EP-A1- 0 678 233
- DE-A- 3 429 817
- DE-A1- 1 949 926
- DE-C- 141 640
- DE-C- 4 411 000
- DE-U1- 9 113 968
- FR-A- 1 563 965
- US-A- 3 982 672
- US-A- 4 173 298
- AMAZONEN-WERKE H. DREYER GMBH & CO. KG: 'Mode d'emploi relatif à la machine Amazone "Airstar Avant"' 01 Octobre 2000,
- AMAZONEN-WERKE H. DREYER GMBH & CO. KG: 'Liste de pièces détachéesrelative à la machine Amazone "Airstar Avant"' AMAZONE AIRSTAR AVANT 01 Novembre 1997,
- AMAZONEN-WERKE H. DREYER GMBH & CO. KG: 'Prospectus relatif à la machine Amazone "Airstar Profi"' 01 Octobre 1997,

## Description

La présente invention se rapporte au domaine technique général du machinisme agricole et en particulier aux machines de distribution. Elle concerne plus particulièrement un mécanisme de dosage selon le préambule de la revendication 1.

Un mécanisme de dosage est connu par le document **US 4 173 298**. Ce mécanisme de dosage est destiné à équiper un semoir et est disposé entre une trémie d'alimentation en graines et un dispositif d'acheminement de graines. Ledit mécanisme de dosage comporte un dispositif de dosage permettant de doser le débit de graines en sortie de trémie d'alimentation en graines. Ledit dispositif de dosage comporte au moins une roue de dosage de type grosses graines et un roue de dosage de type petites graines. Lesdites roues de dosage sont alimentées par un boîtier de distribution implanté en sortie de trémie d'alimentation, sont capables de fonctionner simultanément et sont séparées par un flasque.

Un autre mécanisme de dosage est également connu de l'homme du métier par l'intermédiaire du document **FR 2 019 807**. Ce document présente un dispositif effectuant la distribution de graines et d'engrais simultanément. Ce dispositif réalisé sous forme d'un semoir comporte entre autres une trémie et un dispositif d'acheminement de graines. Le dispositif d'acheminement est composé de conduits permettant d'acheminer les graines ou l'engrais aux socs. Pour la distribution simultanée de graines et d'engrais, la trémie est divisée en deux compartiments, un compartiment pour les graines et l'autre compartiment pour l'engrais. Afin de doser la quantité de graines ou d'engrais à implanter dans le sol, le fond de chaque compartiment est équipé d'un mécanisme de dosage. Les graines et l'engrais en sortie de chaque mécanisme de dosage sont alors acheminés dans le sol via les conduits vers les socs.

Chaque mécanisme de dosage comporte plusieurs dispositifs de dosage espacés le long de la trémie et coopérant avec les orifices d'évacuation ménagés dans la partie inférieure de chaque compartiment. Le dispositif de dosage est formé par une roue de dosage réalisant le dosage grâce à ses cannelures. La quantité de graines ou d'engrais à semer est réglable car les roues de dosage de chaque mécanisme de dosage sont réglables axialement. Ce semoir connu nécessite donc un mécanisme de dosage par type de produits et des conduits correspondants.

Le but de la présente invention est de proposer un semoir capable de semer au moins deux types de produits simultanément dont le nombre d'éléments constituant le semoir et le mécanisme de dosage sont réduits.

L'objet assigné à la présente invention est atteint à l'aide d'un mécanisme de dosage tel que décrit dans la revendication 1.

Une autre caractéristique importante de l'invention consiste en ce que chaque boîtier de distribution comporte le même nombre d'entrée que le dispositif de dosage comporte de roues de dosage.

D'autres caractéristiques de l'invention apparaîtront encore dans les sous-revendications et dans la description suivante d'un exemple de réalisation non limitatif de l'invention représenté sur les dessins annexés sur lesquels:
- la figure 1 représente un semoir conforme à l'invention ;
- la figure 2 représente, à plus grande échelle, une partie du mécanisme de dosage conforme à l'invention ;
- la figure 3 représente une coupe suivant le plan III-III de la figure 2 ;
- la figure 4 représente, à plus grande échelle, un dispositif de dosage comportant une roue de dosage de type grosses graines et une roue de dosage de type petites graines ;
- la figure 5 représente un boîtier de distribution conforme à l'invention.

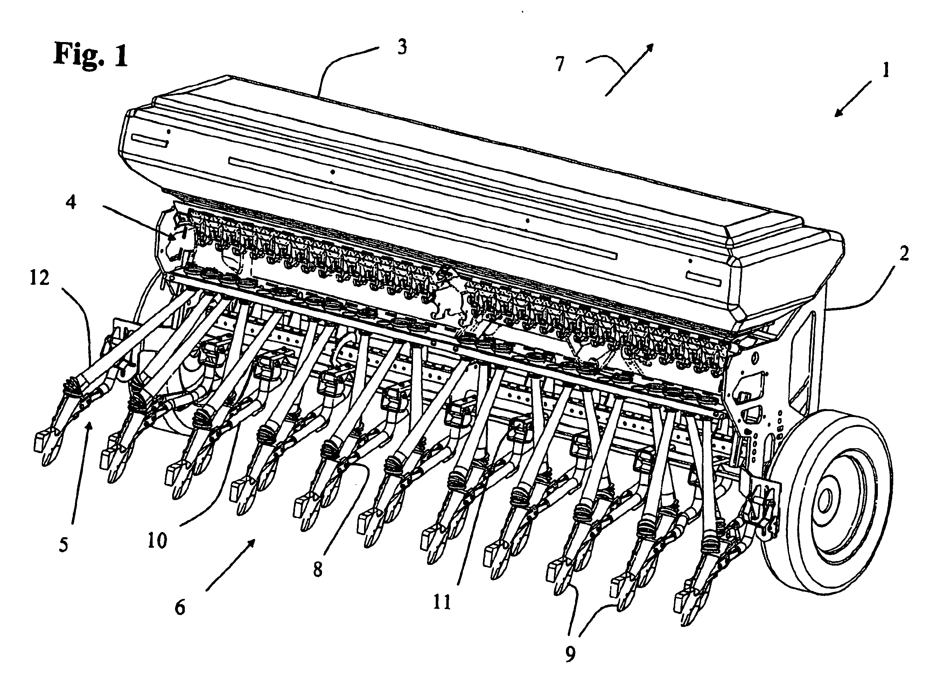

Le semoir (1) représenté sur la figure 1 comporte dans les grandes lignes et d'une manière connue de l'homme du métier un châssis (2), une trémie d'alimentation en graines (3), un mécanisme de dosage (4), un dispositif d'acheminement (5) et un dispositif d'implantation de graines dans le sol (6).

Lors du travail, ledit semoir (1) est amené à être déplacé, suivant une direction d'avance (7), sur un sol à ensemencer. Les graines, initialement contenues dans ladite trémie d'alimentation (3), sont transportées jusqu'au dispositif d'implantation (6) au moyen dudit dispositif d'acheminement (5). Puis lesdites graines sont enfouies dans ledit sol au moyen dudit dispositif d'implantation (6). Le mécanisme de dosage (4), quant à lui, permet de régler précisément la quantité de graines déposée par hectare. Pour sa part, ledit châssis (2) permet de lier, directement ou indirectement, ledit semoir (1) à un véhicule tracteur (non représenté).

Dans la suite de la description, les notions "avant" et "arrière", "devant" et "derrière" sont définies par rapport au sens d'avance (7) et les notions "droite" et "gauche" sont définies en regardant ledit semoir (1) de l'arrière dans ledit sens d'avance (7).

Le semoir (1) de l'invention est du type "semoir en ligne". A cet effet, ledit dispositif d'implantation (6) comprend plusieurs éléments d'implantation (8) disposés à intervalle sensiblement régulier sur toute la largeur dudit semoir (1). Ledit dispositif d'implantation (6) est lié audit châssis (2). D'une manière connue de l'homme du métier, chaque élément d'implantation (8) comporte un soc (9) et un bras de liaison (10). Chaque bras de liaison (10) est lié, à une extrémité, audit châssis (2) au moyen d'une articulation respective (11), et à une autre extrémité audit soc correspondant (9). Lesdits bras de liaison (10) s'étendent vers l'arrière dudit semoir (1), compte tenu de ladite direction d'avance (7) et lesdits socs (9) sont disposés sur plusieurs rangées sensiblement perpendiculaires à ladite direction d'avance (7). Le semoir (1) de l'invention comporte avantageusement deux rangées d'éléments d'implantation (8). Les bras de liaison (10) du dispositif d'implantation (6) sont identiques en forme et en longueur, indépendamment de leurs positions dans la première ou la deuxième rangée. Lesdites articulations (11), d'axe respectif sensiblement perpendiculaire à ladite direction d'avance (7), permettent avantageusement auxdits socs (9) de suivre les dénivellations du sol. Lors du travail, chaque soc (9) creuse un sillon dans le sol et il y dépose les graines. Ledit dispositif d'implantation (6) est aussi équipé d'une herse de recouvrement (non représentée), disposée derrière lesdits socs (9), qui referme lesdits sillons après la dépose des graines.

Ledit semoir en ligne (1) est mécanique. Ainsi le transport des graines de la trémie d'alimentation (3) jusqu'auxdits socs (9) s'effectue par gravité. A cet effet, ledit dispositif d'acheminement (5) comporte plusieurs conduites (12) débouchant chacune sur un soc respectif (9). Afin de permettre auxdits socs (9) de suivre les dénivellations du sol, lesdites conduites (12) sont avantageusement télescopiques et articulées. Chaque ligne de semis est fournie en graines par sa propre conduite (12).

La trémie d'alimentation en graines (3) comporte dans sa partie inférieure des orifices d'évacuation (non représentés) débouchant sur ledit mécanisme de dosage (4), lequel est relié auxdits socs (9) au moyen desdites conduites (12). On voit que ladite trémie d'alimentation en graines (3) est liée audit châssis (2) et qu'elle s'étend transversalement à ladite direction d'avance (7). On notera que pour simplifier la représentation du dessin de la figure 1, le mécanisme de dosage (4) n'est pas représenté en détail mais il est simplement situé au niveau du rectangle en trait discontinu. Le mécanisme de dosage (4) trouve avantageusement sa place entre ladite trémie d'alimentation en graines (3) et le dispositif d'implantation (6).

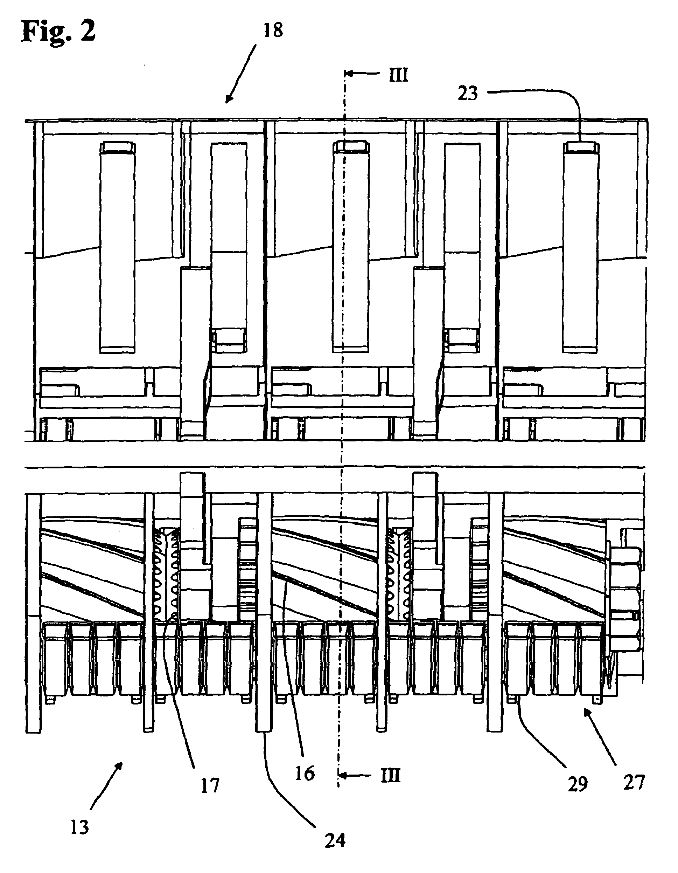

La figure 2 représente plus précisément le mécanisme de dosage (4). On peut noter que ledit mécanisme de dosage (4) est constitué de plusieurs dispositifs de dosage (13) qui sont montés sur un arbre de distribution (14). Cet arbre de distribution (14) s'étend sensiblement sur toute la largeur du semoir (1). Ce semoir en ligne (1) est donc équipé pour chaque ligne de semis d'un dispositif de dosage (13) gérant le débit de graines à la sortie de la trémie (3). Chaque dispositif de dosage (13) est relié à une conduite (12) dudit dispositif d'acheminement (5).

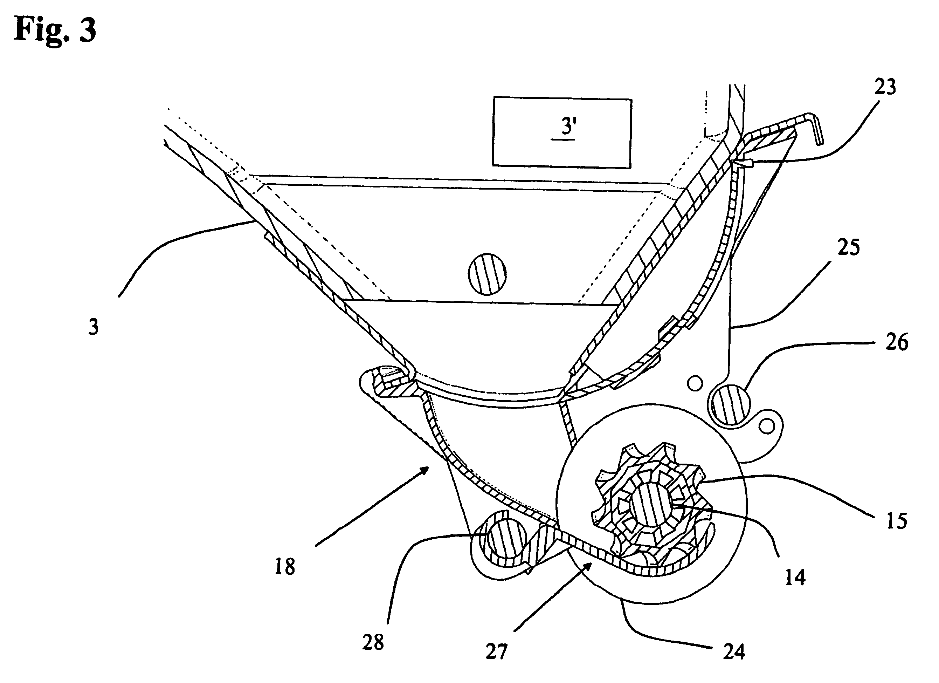

La figure 3 représente une vue partielle de la trémie d'alimentation en graines (3) destinée à être montée sur des machines de distribution et en particulier sur des semoirs comme défini ci-avant. Le mécanisme de dosage (4) est disposé selon un plan sensiblement horizontal sous la trémie (3) afin d'être alimenté en graines. L'arbre de distribution (14) est, quant à lui, disposé approximativement sous la trémie d'alimentation en graines (3). Ledit arbre de distribution (14) est sensiblement horizontal et perpendiculaire à la direction d'avance (7).

D'une manière connue de l'homme de l'art, le mécanisme de dosage (4) ou plus précisément l'arbre de distribution (14) est entraîné en rotation autour de son axe au moyen d'un dispositif d'entraînement (non représenté). Ce dispositif d'entraînement comporte une roue d'entraînement (non représentée) qui lors du travail roule sur le sol et son mouvement de rotation est transmis audit mécanisme de dosage (4) au moyen d'organes de transmission (non représentés). Les organes de transmission respectifs sont liés audit mécanisme de dosage (4) au moyen d'une boîte de vitesses (non représentée) ou d'un variateur (non représenté) et d'une roue libre (non représentée). En entraînant plus ou moins vite ledit mécanisme de dosage (4), pour une même vitesse d'avance dudit semoir (1), ladite boîte de vitesses ou ledit variateur permettent une première approche dans le réglage de la quantité de semence déposée.

Selon l'exemple de réalisation représenté sur la figure 3, chaque dispositif de dosage (13) est muni de cannelures (15). Le volume, engendré par lesdites cannelures (15) lors de la rotation de l'arbre de distribution (14), détermine la quantité de graines implantée dans le sol. Afin de garantir un dosage homogène, la vitesse de rotation desdits dispositifs de dosage (13) est avantageusement proportionnelle à la vitesse d'avance dudit semoir (1). Les cannelures (15) permettent avantageusement de doser toutes sortes de graines habituellement semées par les agriculteurs.

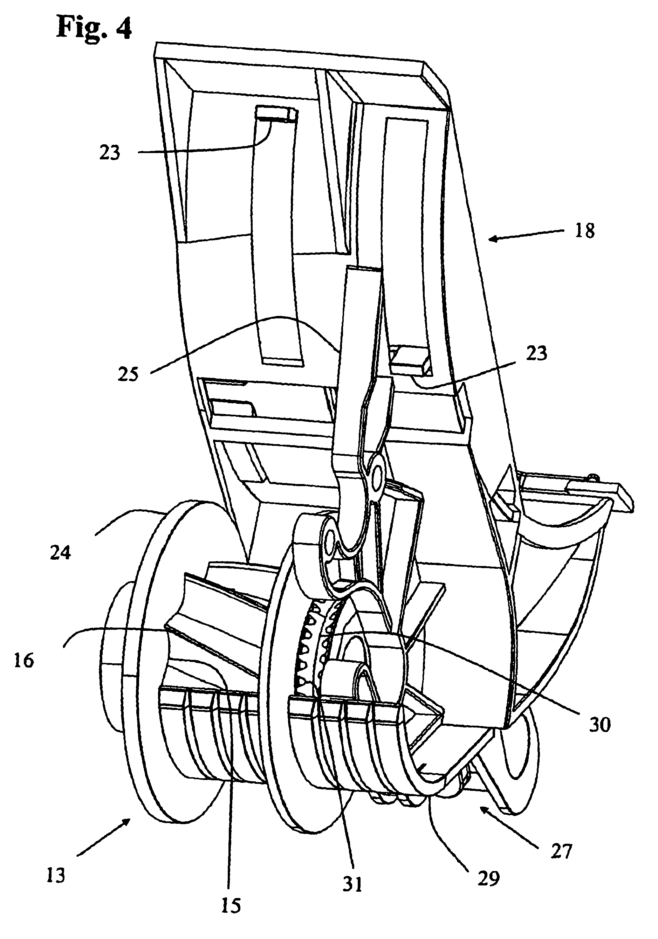

D'une manière préférentielle, le semoir (1) de l'invention pourra semer beaucoup de variétés de produits. Généralement, les agriculteurs sont amenés à semer des graines de taille et de forme différentes. Ainsi, ils emploient des grosses graines allongées telle que l'orge, l'avoine ou le blé, des petites graines allongées telle que le lin ou le ray grass ou encore des petites graines rondes comme le colza ou la moutarde. De part ces différences très marquées, les semoirs connus comportent des éléments de dosage adaptés à certains types de graines. Le dispositif de dosage (13) représenté sur la figure 4, comporte avantageusement une roue de dosage (16) de type grosses graines et une roue de dosage (17) de type petites graines. Les roues de dosage (16) de type grosses graines sont munies de cannelures hélicoïdales pour les grosses graines et les roues de dosage (17) de type petites graines sont munies de petites encoches en quinconce pour les petites graines.

Selon une caractéristique importante de la présente invention, ledit dispositif de dosage (13) comporte au moins deux roues de dosage (16, 17) capables de fonctionner simultanément. En effet, la roue de dosage (16) de type grosses graines et la roue de dosage (17) de type petites graines sont toutes deux montées sur l'arbre de distribution (14) et sont alimentées par un boîtier de distribution (18). Ledit dispositif de dosage (13) de l'invention permet donc de distribuer des graines à la fois au moyen de la roue de dosage (16) de type grosses graines et de la roue de dosage (17) de type petites graines.

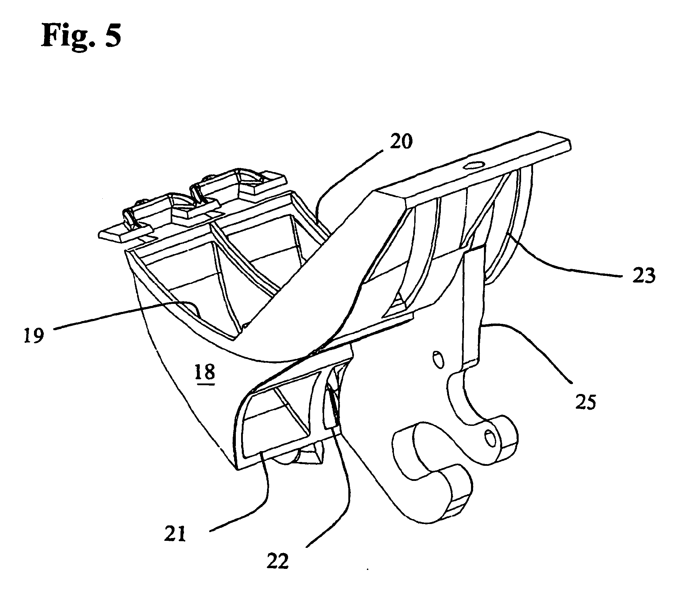

A la lumière de la figure 3, chaque dispositif de dosage (13) comporte en amont un boîtier de distribution (18) fixé sur la trémie d'alimentation en graines (3). Comme représenté sur la figure 5 et selon une caractéristique importante de l'invention, chaque boîtier de distribution (18) comporte avantageusement deux entrées de graines (19, 20). Lesdites entrées de graines (19, 20) correspondent aux orifices d'évacuation ménagés dans la partie inférieure de ladite trémie d'alimentation (3). L'entrée de graines (19) est utilisée essentiellement pour de grosses graines tandis que l'entrée de graines (20) est utilisée principalement pour des petites graines rondes. On peut noter que toutes les entrées de graines (19, 20) présentent une largeur identique, adaptée aux orifices d'évacuation de graines ménagées dans la partie inférieure de la trémie (3). A chaque entrée (19, 20) du boîtier de distribution (18) correspond une sortie de graines (21, 22).

Les sorties de graines (21, 22) du boîtier de distribution (18) sont destinées à alimenter les deux roues de dosage (16, 17). La sortie de graines (21) alimente avantageusement la roue de dosage (16) de type grosses graines et la sortie de graines (22) alimente la roue de dosage (17) de type petites graines. La sortie de graines (22) est avantageusement adaptée au semis de petites graines rondes, elle présente donc une largeur sensiblement identique à ladite roue de dosage (17) de type petites graines. La sortie de graines (21), quant à elle, présente une largeur sensiblement identique à ladite roue de dosage (16) de type grosses graines et sensiblement égale à la largeur de l'entrée de graines (19). Chaque boîtier de distribution (18) comporte encore une trappe (23) par entrées de graines (19, 20) permettant de condamner l'alimentation du dispositif de dosage (13) d'une ligne de semis. Il est ainsi possible de condamner un dispositif de dosage (13) lorsque l'on ne désire pas implanter de graines dans une ligne de semis afin de réaliser des traitements phytosanitaires ultérieurs. De plus, l'utilisateur peut ainsi aussi obtenir différents écartements des lignes de semis qui seront alors adaptés aux types de graines implantées.

Afin de réaliser la distribution de deux produits distincts simultanément, il est nécessaire de prévoir deux moyens de stockage distincts. Selon un mode de réalisation non représenté, les petites graines sont stockées dans une trémie supplémentaire (3') disposée à proximité de la trémie d'alimentation (3). Des conduits achemineront les petites graines de la trémie supplémentaire (3') vers les dispositifs de dosage (13) de chaque ligne de semis. La partie inférieure de la trémie supplémentaire (3') sera disposée suffisamment en hauteur pour que les graines tombent par gravité dans l'entrée de graines (20) du boîtier de distribution (18). Cette trémie supplémentaire (3') peut également être disposée à l'intérieur de la trémie d'alimentation (3) comme représenté schématiquement sur la figure 3.

La figure 2 représente un exemple de réalisation du mécanisme de dosage (4). Cette figure présente la disposition en alternance des roues de dosage (16) de type grosses graines et des roues de dosage (17) de type petites graines sur l'arbre de distribution (14). Les roues de dosage (16, 17) d'un même dispositif de dosage sont avantageusement différenciées par un flasque (24) pour que deux types de graines ne se mêlent pas. On remarque également que la roue de dosage (16) de type grosses graines présente d'une part un diamètre extérieur au niveau des cannelures (15) supérieur au diamètre de la roue de dosage (17) de type petites graines et d'autre part une largeur supérieure à la largeur de la roue de dosage (17) de type petites graines. Le montage et l'entraînement des roues de dosage (16, 17) sur l'arbre de distribution (14) étant à la portée de l'homme de l'art, ils n'ont donc pas été représentés sur les figures et ne seront pas décrit davantage.

Selon une caractéristique importante, la roue de dosage (16) de type grosses graines est avantageusement cloisonné entre deux flasques (24). Lesdits flasques latéraux (24) sont entraînés simultanément, en rotation, avec lesdites roues de dosage (16). Ceci favorise l'écoulement des graines et limite le risque de coincement des graines entre les cannelures (15) et lesdits flasques latéraux (24). Le diamètre des flasques (24) est avantageusement supérieur au diamètre des roues de dosage (16) de type grosses graines ce qui permet de guider les graines en sortie du boîtier de distribution (18).

Les petites graines sortant du boîtier de distribution (18) sont dirigées vers la roue de dosage (17) de type petites graines où elles sont guidées d'un côté par un flasque (24) de séparation et de l'autre côté par une paroi (25). Cette paroi (25) est disposée directement à côté de la sortie des petites graines (22). La paroi (25) permet de maintenir le boîtier de distribution correspondant (18) en dessous de ladite trémie d'alimentation en graines (3). Cette paroi (25) comporte des ouvertures destinées à recevoir d'une part l'arbre de distribution (14) et d'autre part un arbre additionnel (26). La présence d'un flasque unilatéral (24) d'un côté de la roue de dosage (17) de type petites graines favorise l'écoulement des petites graines et évite le coincement et l'écrasement des graines. D'une manière générale, l'arbre additionnel (26) est utilisé pour le jalonnage. Cet arbre additionnel (26) permet également d'entraîner à la convenance de l'utilisateur une des roues de dosage (16 ; 17) afin d'obtenir un dosage différent pour le deuxième type de graines.

Selon les figures, chaque dispositif de dosage (13) est encore pourvu d'une porte inférieure (27) disposée au voisinage des roues de dosage (16, 17) de manière à canaliser les graines en sortie. Ces graines tombent alors dans les conduites (12) acheminant les graines aux socs (9). Ces conduites (12) comportent chacune à leur extrémité une pièce en forme d'entonnoir permettant de recueillir les différentes graines sortant du dispositif de dosage (13). Les deux types de graines tombent alors dans le même sillon. D'une manière préférentielle, ladite porte inférieure (27) est montée de manière pivotante sur un axe (28) disposé sous la trémie d'alimentation en graines (3). Cet axe (28) est disposé parallèlement à l'arbre de distribution (14), en contrebas et légèrement vers l'avant de ce dernier par rapport à la direction d'avance (7). Ladite porte inférieure (17) est immobilisée sur l'axe (28) au moyen d'une vis (non représentée). De part ce montage, lesdites portes inférieures (27) peuvent se rapprocher ou s'éloigner desdites roues de dosage (16, 17) correspondantes par simple pivotement de l'axe (28). De plus, la largeur de ladite porte inférieure (27) est adaptée à la largeur de la roue de dosage (16) de type grosses graines. La porte inférieure (27) qui canalisent le flux de graines en sortie de cannelures (15) trouve avantageusement sa place entre lesdits deux flasques (24).

Lors du travail, ladite porte inférieure (27) est destinée à venir au niveau des cannelures (15) de la roue de dosage (16) de type grosses graines, comme représenté sur la figure 3. Selon l'exemple de réalisation représenté sur la figure 4, ladite porte inférieure (27) comporte avantageusement quatre lamelles (29) d'une largeur sensiblement identique pouvant s'écarter de leurs positions de travail. Chaque lamelle (29) est avantageusement souple, et permet ainsi d'augmenter ponctuellement la distance entre une des lamelles (29) et ladite roue de dosage (16) de type grosses graines afin de permettre l'évacuation de graines bloquées sans engendrer le phénomène de semis en paquet. Grâce auxdites lamelles (29), on favorise l'évacuation des graines avec plus de régularité surtout lors de coincement visible de grosses graines. Lorsque la graine ou le corps est évacué, la lamelle (29) revient immédiatement dans sa position de travail au voisinage des cannelures (15).

D'après l'exemple de réalisation de la figure 4, les roues de dosage (17) de type petites graines sont aussi équipées d'une porte inférieure (27). Cette porte (27) est identique à celle d'une roue de dosage (16) de type grosses graines. Néanmoins de part la petite largeur de la roue de dosage (17) de type petites graines, une seule lamelle (29) recouvre sensiblement toute la largeur de la roue de dosage (17) de type petites graines. Lors du semis de petites graines, la porte inférieure (27) de la roue de dosage (17) de type petites graines n'est pas directement en contact avec la roue de dosage (17) de type petites graines mais à quelques millimètres favorisant l'écoulement des graines. Les petites graines rondes sont moins sujettes à des accumulations de graines.

D'une manière préférentielle comme représentée sur la figure 4, la roue de dosage (17) de type petites graines comporte une gorge centrale (30) de forme générale en "V". La pointe du "V" formant la gorge centrale (30) et les branches du "V" formant les flancs de la gorge (30). Les flancs de ladite gorge centrale (30) comportent des encoches (31) à intervalle régulier favorisant la régularité du flux de graines. Grâce à cette gorge centrale (30), les graines sont entraînées par frottements. Cette roue de dosage (17) de type petites graines est aussi utilisée pour le dosage d'engrais sous forme de granulé. Pour simplifier la fabrication de la roue de dosage (17) de type petites graines, celle-ci est réalisée de préférence en deux parties symétriques par rapport à un axe vertical passant par la gorge centrale (30).

Selon un autre exemple de réalisation non représenté, chaque dispositif de dosage (13) comporte une conduite d'acheminement (12) par produit. De ce fait chaque sortie de graines (21, 22) comporte sa propre conduite (12) et les produits ne sont pas directement à proximité l'un de l'autre dans le sillon.

Le mécanisme de dosage (4) et le semoir (1) qui viennent d'être décrits, ne sont qu'un exemple de réalisation et d'utilisation qui ne saurait en aucun cas limiter le domaine de protection défini par les revendications suivantes.

En effet selon un autre exemple de réalisation non représenté, ledit châssis (2) est lié indirectement à un véhicule tracteur. Le châssis (2) est conçu pour être attelé à un outil de travail du sol, lequel est à son tour lié audit véhicule tracteur. Une telle combinaison d'un outil de travail du sol et d'un semoir permet de préparer le lit de semence et d'ensemencer en un seul passage du véhicule tracteur. Ainsi ledit semoir est utilisé comme un semoir intégré.

Il est aussi tout à fait possible de semer qu'un seul type de produit avec ce semoir (1). Ainsi, il suffit de condamner au moyen de la trappe (23) soit l'une des entrées (19 ; 20), soit l'autre des entrées (20 ; 19) selon le type de graines à implanter.

Il est encore possible d'utiliser une trémie comportant deux compartiments contenant chacun un type de produit.

## Revendications

1. Mécanisme de dosage (4), destiné à équiper un semoir (1), disposé entre une trémie d'alimentation en graines (3) et un dispositif d'acheminement de graines (5) et comportant un dispositif de dosage (13) permettant de doser le débit de graines en sortie de trémie d'alimentation en graines (3), ledit dispositif de dosage (13) comportant au moins une roue de dosage (16) de type grosses graines et au moins une roue de dosage (17) de type petites graines, lesdites roues de dosage (16, 17) étant alimentées par un boîtier de distribution (18) implanté en sortie de trémie d'alimentation (3) laquelle présente deux moyens de stockage distincts, étant capables de fonctionner simultanément et étant séparées par un flasque (24), ***caractérisé par le fait que*** ledit flasque (24) est entraîné en rotation avec lesdites roues de dosage (16, 17) et que le diamètre dudit flasque (24) est supérieur au diamètre de ladite roue de dosage de type grosses graines (16).

2. Mécanisme de dosage selon la revendication 1, ***caractérisé par le fait que*** ladite roue de dosage (16) de type grosses graines comporte un diamètre et une largeur supérieures à la roue de dosage (17) de type petites graines.

3. Mécanisme de dosage selon la revendication 1 ou 2, ***caractérisé par le fait que*** ledit boîtier de distribution (18) comporte autant d'entrées de graines (19, 20) que le dispositif de dosage comporte de roues de dosage (16, 17).

4. Mécanisme de dosage selon la revendication 3, ***caractérisé par le fait que*** lesdites entrées de graines (19, 20) du boîtier de distribution (18) sont alimentées simultanément.

5. Mécanisme de dosage selon la revendication 3 ou 4, ***caractérisé par le fait qu'*à** chaque entrée de graines (19, 20) correspond une sortie de graines (21, 22).

6. Mécanisme de dosage selon la revendication 5, ***caractérisé par le fait que*** la largeur de chaque sortie de graines (21 ; 22) du boîtier de distribution (18) est adaptée à la largeur de la roue de dosage (16 ; 17) correspondante.

7. Mécanisme de dosage selon l'une quelconque des revendications 3 à 6, ***caractérisé par le fait que*** la largeur de chaque entrée de graines (19 ; 20) du boîtier de distribution (18) est adaptée à la largeur d'un orifice correspondant d'évacuation des graines de la trémie d'alimentation (3).

8. Mécanisme de dosage selon l'une quelconque des revendications 1 à 7, ***caractérisé par le fait que*** ladite roue de dosage (16) de type grosses graines est cloisonnée par deux flasques (24).

9. Mécanisme de dosage selon l'une quelconque des revendications 1 à 8, ***caractérisé par le fait que*** ladite roue de dosage (17) de type petites graines est associée à un seul flasque (24).

10. Mécanisme de dosage selon l'une quelconque des revendications 1 à 9, ***caractérisé par le fait que*** chaque roue de dosage (16, 17) est associée à une porte inférieure (27).

11. Mécanisme de dosage selon la revendication 10, ***caractérisé par le fait que*** la porte inférieure (27) de la roue de dosage (17) de type petites graines est identique à la porte inférieure (27) de la roue de dosage (16) de type grosses graines.

12. Mécanisme de dosage selon la revendication 10 ou 11, ***caractérisé par le fait que*** ladite porte inférieure (27) comporte des lamelles (29).

13. Mécanisme de dosage selon l'une quelconque des revendications 1 à 12, ***caractérisé par le fait que*** ledit dispositif de dosage (13) est alimenté par ladite trémie d'alimentation en graines (3) et une trémie supplémentaire (3').

14. Semoir agricole comportant :
- au moins un châssis (2),
- au moins une trémie d'alimentation en graines (3 ; 3'),
- un mécanisme de dosage (4) entraîné par au moins un dispositif d'entraînement et comportant au moins un dispositif de dosage (13),
- un dispositif d'acheminement (5), et
- un dispositif d'implantation (6),
***caractérisé par le fait que*** ledit mécanisme de dosage (4) est tel que défini selon l'une des revendications 1 à 13.

15. Semoir selon la revendication 14, **caractérisé par le fait que** ledit semoir comporte une trémie supplémentaire (3').

16. Semoir selon la revendication 15, ***caractérisé par le fait que*** ladite trémie supplémentaire (3') est disposée dans ladite trémie d'alimentation en graines (3).

## Claims

1. Metering mechanism (4) intended to equip a seed drill (1), positioned between a seed supply hopper (3) and a seed conveying device (5) and comprising a metering device (13) making it possible to meter the flow rate of seeds leaving the seed supply hopper (3), the said metering device (13) comprising at least one metering wheel (16) for the large seed type and at least one metering wheel (17) for the small seed type, the said metering wheels (16, 17) being fed by a distribution box (18) installed at the exit of the supply hopper (3), being capable of operating simultaneously and being separated by a flange (24), ***characterized in* that** the said flange (24) is rotationally driven with the said metering wheels (16, 17) and the said flanges (24) have a diameter greater than the diameter of the said metering wheel (16) for the large seed type.

2. Metering mechanism according to Claim 1, ***characterized in* that** the said metering wheel (16) for the large seed type has a diameter and a width which exceed those of the metering wheel (17) for the small seed type.

3. Metering mechanism according to Claim 1 or 2, ***characterized in* that** the said distribution box (18) comprises as many seed inlets (19,20) as the metering device has metering wheels (16, 17).

4. Metering mechanism according to Claim 3, ***characterized in* that** the said seed inlets (19,20) of the distribution box (18) are fed simultaneously.

5. Metering mechanism according to Claim 3 or 4, ***characterized in* that** a seed outlet (21, 22), corresponds to each seed inlet (19,20).

6. Metering mechanism according to Claim 5, ***characterized in* that** the width of each seed outlet (21; 22) from the distribution box (18) is suited to the width of the corresponding metering wheel (16; 17).

7. Metering mechanism according to any one of Claims 3 to 6, ***characterized in* that** the width of each seed inlet (19; 20) of the distribution box (18) is suited to the width of a corresponding seed discharge orifice in the supply hopper (3).

8. Metering mechanism according to any one of Claims 1 to 7, ***characterized in* that** the said metering wheel (16) for the large seed type is divided up by two flanges (24).

9. Metering mechanism according to any one of Claims 1 to 8, ***characterized in* that** the said metering wheel (17) for the small seed type is associated with one single flange (24).

10. Metering mechanism according to any one of Claims 1 to 9, ***characterized in* that** each metering wheel (16, 17) is associated with a lower door (27).

11. Metering mechanism according to Claim 10, ***characterized in* that** the lower door (27) of the metering wheel (17) for the small seed type is identical to the lower door (27) of the metering wheel (16) for the large seed type.

12. Metering mechanism according to Claim 10 or 11, ***characterized in* that** the said lower door (27) comprises strips (29).

13. Metering mechanism according to any one of Claims 1 to 12, ***characterized in* that** the said metering device (13) is fed by the said seed supply hopper (3) and an additional hopper (3').

14. Agricultural seed drill comprising:
- at least one chassis (2),
- at least one seed supply hopper (3; 3'),
- a metering mechanism (4) driven by at least one drive device and comprising at least one metering device (13),
- a conveying device (5), and
- a planting device (6),
***characterized in* that** the said metering mechanism (4) is as defined in one of Claims 1 to 13.

15. Seed drill according to Claim 14, ***characterized in* that** the said seed drill comprises an additional hopper (3').

16. Seed drill according to Claim 15, ***characterized in* that** the said additional hopper (3') is positioned inside the said seed supply hopper (3).

## Patentansprüche

1. Dosiermechanismus (4), der dazu bestimmt ist, eine Sämaschine (1) auszustatten, der zwischen einem Körnerzuführtrichter (3) und einer Vorrichtung zur Beförderung der Körner (5) angeordnet ist und eine Dosiervorrichtung (13) umfasst, die es ermöglicht, die Körnermenge am Ausgang des Körnerzuführtrichters (3) zu dosieren, wobei die Dosiervorrichtung (13) mindestens ein Dosierrad (16) für grobe Körner und mindestens ein Dosierrad (17) für feine Körner umfasst, wobei die Dosierräder (16, 17) von einem Verteilungsgehäuse (18) gespeist werden, das am Ausgang des Zuführtrichters (3) angeordnet ist, und gleichzeitig funktionieren können und durch einen Flansch (24) getrennt sind, ***dadurch gekennzeichnet,* dass** der Flansch (24) in Drehung mit den Dosierrädern (16, 17) angetrieben wird und dass die Flansche (24) einen größeren Durchmesser als der Durchmesser des Dosierrades (16) für grobe Körner aufweisen.

2. Dosiermechanismus nach Anspruch 1, ***dadurch gekennzeichnet,* dass** das Dosierrad (16) für grobe Körner einen Durchmesser und eine Breite aufweist, die größer als das Dosierrad (17) für feine Körner sind.

3. Dosiermechanismus nach Anspruch 1 oder 2, ***dadurch gekennzeichnet,* dass** das Verteilungsgehäuse (18) ebenso viele Körnereingänge (19, 20) wie die Dosiervorrichtung Dosierräder (16, 17) umfasst.

4. Dosiermechanismus nach Anspruch 3, ***dadurch gekennzeichnet,* dass** die Körnereingänge (19, 20) des Verteilungsgehäuses (18) gleichzeitig gespeist werden.

5. Dosiermechanismus nach Anspruch 3 oder 4, ***dadurch gekennzeichnet,* dass** jedem Körnereingang (19, 20) ein Körnerausgang (21, 22) entspricht.

6. Dosiermechanismus nach Anspruch 5, ***dadurch gekennzeichnet,* dass** die Breite jedes Körnerausgangs (21; 22) des Verteilungsgehäuses (18) an die Breite des entsprechenden Dosierrades (16; 17) angepasst ist.

7. Dosiermechanismus nach irgend einem der Ansprüche 3 bis 6, ***dadurch gekennzeichnet,* dass** die Breite jedes Körnereingangs (19; 20) des Verteilungsgehäuses (18) an die Breite einer entsprechenden Entleerungsöffnung für die Körner aus dem Zuführtrichter (3) angepasst ist.

8. Dosiermechanismus nach irgend einem der Ansprüche 1 bis 7, ***dadurch gekennzeichnet,* dass** das Dosierrad (16) für grobe Körner durch zwei Flansche (24) abgetrennt ist.

9. Dosiermechanismus nach irgend einem der Ansprüche 1 bis 8, ***dadurch gekennzeichnet,* dass** das Dosierrad (17) für feine Körner mit einem einzigen Flansch (24) verbunden ist.

10. Dosiermechanismus nach irgend einem der Ansprüche 1 bis 9, ***dadurch gekennzeichnet,* dass** jedem Dosierrad (16, 17) eine untere Tür (27) zugeordnet ist.

11. Dosiermechanismus nach Anspruch 10, ***dadurch gekennzeichnet,* dass** die untere Tür (27) des Dosierrades (17) für feine Körner identisch mit der unteren Tür (27) des Dosierrades (16) für grobe Körner ist.

12. Dosiermechanismus nach Anspruch 10 oder 11, ***dadurch gekennzeichnet,* dass** die untere Tür (27) Lamellen (29) umfasst.

13. Dosiermechanismus nach irgend einem der Ansprüche 1 bis 12, ***dadurch gekennzeichnet,* dass** die Dosiervorrichtung (13) vom Körnerzuführtrichter (3) und einem Zusatztrichter (3') gespeist wird.

14. Landwirtschaftliche Sämaschine mit
- mindestens einem Rahmen (2),
- mindestens einem Körnerzuführtrichter (3; 3'),
- einem Dosiermechanismus (4), der von mindestens einer Antriebsvorrichtung angetrieben wird und mindestens eine Dosiervorrichtung (13) umfasst;
- einer Fördereinrichtung (5), und
- einer Einsetzvorrichtung (6),
***dadurch gekennzeichnet,* dass** der Dosiermechanismus (4) einem der Ansprüche 1 bis 13 entspricht.

15. Sämaschine nach Anspruch 14, ***dadurch gekennzeichnet,* dass** die Sämaschine einen Zusatztrichter (3') umfasst.

16. Sämaschine nach Anspruch 15, ***dadurch gekennzeichnet,* dass** der Zusatztrichter (3') in dem Körnerzuführtrichter (3) angeordnet ist.
